(19) Europäisches Patentamt
European Patent Office
Office européen des brevets

(11) Veröffentlichungsnummer: **0 333 643**
**A2**

(12) # EUROPÄISCHE PATENTANMELDUNG

(21) Anmeldenummer: **89810088.8**

(22) Anmeldetag: **02.02.89**

(51) Int. Cl.4: **C 08 K 5/00**
C 08 L 25/10, C 08 L 51/04,
C 08 L 53/02, C 08 L 55/02
//(C08K5/00,5:13,5:25)

(30) Priorität: **12.02.88 CH 517/88**

(43) Veröffentlichungstag der Anmeldung:
**20.09.89 Patentblatt 89/38**

(84) Benannte Vertragsstaaten:
**BE DE ES FR GB IT NL**

(71) Anmelder: **CIBA-GEIGY AG**
**Klybeckstrasse 141**
**CH-4002 Basel (CH)**

(72) Erfinder: **Gilg, Bernard, Dr.**
**Route de la Petite Camargue 20**
**F-68300 Saint-Louis-La-Chaussée (FR)**

**Evans, Samuel, Dr.**
**Route des Charbonnières 17**
**CH-1723 Marly (CH)**

(54) **Stabilisierte Zusammensetzungen.**

(57) Ein Gemisch aus einem phenolischen Antioxidans und einem Metalldesaktivator, insbesondere einem Hydrazinderivat, eignet sich zum Stabilisieren von schlagfestem Polystyrol, Acrylnitril-Butadien-Styrol-Copolymer (ABS) oder carboxyliertem Styrol-Butadien-Elastomer, wobei Polyphenylenharzmassen, die Polystyrol enthalten, ausgeschlossen sind.

EP 0 333 643 A2

## Beschreibung

### Stabilisierte Zusammensetzungen

Die vorliegende Erfindung betrifft stabilisierte Zusammensetzungen, die ein Gemisch aus phenolischen Antioxidantien und Metalldesaktivatoren, insbesondere Hydrazinderivaten, enthalten.

Es ist bekannt, Polyolefine gegen Oxidation, welche besonders durch die Anwesenheit von Metallen, wie z.B. Kupfer, begünstigt wird, mit einem Gemisch aus einem phenolischen Antioxidans und einem Hydrazinderivat zu stabilisieren. Als repräsentativer Stand der Technik seien z.B. folgende Veröffentlichungen genannt: Derwent Zitate 22 869Y/13, 30 175A/16, 56 049D/31 und 57 700W/35, Chemical Abstracts Zitate 81: 153 648q, 83: 44 215s, 86: 190 882k, 86: 190 892p, 87: 86 204a, 98: 55 065d und 103: 216 372r; US-A-T9 14009, US-A-T9 45001, US-A-3 110 696, US-A-3 870 680, US-A-3 931 103 und US-A-4 044 200, DE-A-2 124 641, DE-A-2 129 996, DE-A-2 310 800, DE-A-2 360 114, DE-A-2 433 635, DE-A-2 438 406, DE-A-2 438 898, DE-A-2 447 747 und DE-A-2 517 800, FR-A-1 377 097, FR-A-1 481 105 und FR-A-2 238 220, WO-A-82/02 206 sowie A. di Battista et al., Soc. Plast. Eng. Tech. Pap. 1975, 21, 280-282.

Ferner ist aus US-A-3 978 156 und US-A-3 929 726 bekannt, Polyurethanzusammensetzungen mit einem Gemisch aus einem Hydrazid, einem phenolischen Antioxidans und einem UV-Absorber zu stabilisieren.

In der DE-A-2 454 124 wird eine Zusammensetzung aus Polyphenylenether und Polystyrol beschrieben, die unter anderem ein Hydrazid und ein phenolisches Antioxidans enthält.

Die Stabilisierung von thermoplastischen Polyharnstoffen mit einem aliphatischen Carbonsäurehydrazid in Kombination mit einer Phenolverbindung und einem Alkalidihydrogenphosphit ist aus der DE-A-1 235 577 bekannt.

In der DE-A-2 417 535 wird die Stabilisierung von Acrylnitril-Butadien-Styrol mit einem sterisch gehinderten Amin in Kombination mit einem Oxalanilid beschrieben, wobei das Polymer für die Grundstabilisierung bereits 2,6-Di-tert-butyl-p-kresol und Tris[nonylphenyl]phosphit enthält.

In der US-A-4 013 618 werden Polyester-Polyether-Blockcopolymere offenbart, die mit einem Hydrazid und einem phenolischen Antioxidans stabilisiert sind.

In Chemical Abstract 90: 169 654k wird Poly(4-methyl-1-penten) beschrieben, welches u.a. ein Hydrazid und Pentaerythrit-tetrakis[3-(3,5-di-tert-butyl-4-hydroxyphenyl)propionat] enthält.

In Research Disclosure 1980, 19618, (Seite 321) wird als Stabilisatorsystem für Ethylen-Alkylacrylat-Elastomere die Kombination von Antioxidantien mit Metalldesaktivatoren, wie z.B. N,N′-Bis[3,-(3,5-di-tert-butyl-4-hydroxyphenyl)propionyl]hydrazin, vorgeschlagen.

Aus den JP-A-49-112 868, JP-A-49-035 281 und JP-A-57-115 485 ist Polypropylen enthaltend ein Hydrazinderivat und ®Topanol CA (phenolisches Antioxidans) bekannt sowie eine Acrylnitril-Butadien-Styrol-Zusammensetzung, die lediglich Zinkstearat, $TiO_2$ und ein Hydrazinderivat enthält.

J.J. Zeilstra beschreibt in "Die Angewandte Makromolekulare Chemie 137, 83-92 (1985) "einen Copoly(ether-ester), der ®Irganox MD 1024 (Hydrazinderivat) und ®Irganox 1330 (phenolisches Antioxidans) enthält.

Die Erfindung betrifft Zusammensetzungen enthaltend

a) schlagfestes Polystyrol, ein Acrylnitril-Butadien-Styrol Copolymer (ABS) oder ein carboxyliertes Styrol-Butadien-Elastomer, wobei Polyphenylenharzmassen, die Polystyrol enthalten, ausgeschlossen sind,

b) mindestens eine Verbindung der Formel I, II, III oder/und IV,

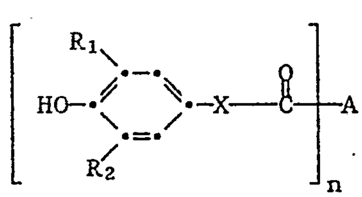

(I)

worin X eine direkte Bindung, Methylen, Ethylen oder eine Gruppe $-CH_2-\underset{R}{CH}-$ ist und R $C_1$-$C_8$-Alkyl bedeutet, $R_1$ und $R_2$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl darstellen und $R_2$ zusätzlich Wasserstoff ist, n eine ganze Zahl von 1 bis 6 ist, wenn n 1 bedeutet, A ein einwertiger Rest einer Hexose oder eines Hexitols, eine Gruppe $-O-CH_2-C(CH_2OH)_3$, $-O-[(CH_2)_t-O]_v-(CH_2)_t-OR'$, $-OR_3$ oder

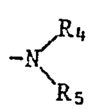

ist, worin t eine ganze Zahl von 2 bis 4 und v eine ganze Zahl von 2 bis 20 bedeuten, R′ Wasserstoff oder $C_1$-$C_{12}$-Alkyl ist und $R_3$, $R_4$ und $R_5$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl oder Phenyl bedeuten,

wenn n 2 ist, A ein zweiwertiger Rest einer Hexose oder eines Hexitols, eine Gruppe $-(O-CH_2)_2$ $C-(CH_2OH)_2$, $-O-X_1-O-$, $-NH-X_2-NH-$,

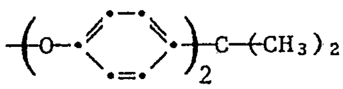 oder $-O[(CH_2)_t-O]_v$ bedeutet, worin

$X_1$ 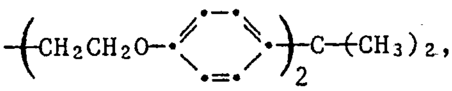

$C_2$-$C_{10}$-Alkylen, 3-Thiapentan-1,5-diyl, 2-Buten-1,4-diyl oder 2-Butin-1,4-diyl ist, $X_2$ $C_2$-$C_{10}$-Alkylen darstellt und t und v die oben angegebene Bedeutung haben,
wenn n 3 ist, A ein dreiwertiger Rest einer Hexose oder eines Hexitols oder eine Gruppe $-(O-CH_2)_3$ $C-R_6$ bedeutet, worin $R_6$ Wasserstoff, $-CH_2OH$, $C_1$-$C_4$-Alkyl, ($C_1$-$C_{18}$-Alkyl)amido oder eine Gruppe

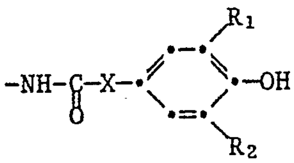 darstellt und $R_1$, $R_2$

und X die oben angegebene Bedeutung besitzen,
wenn n 4 bedeutet, A ein vierwertiger Rest einer Hexose oder eines Hexitols, die Gruppe $-(O-CH_2)_4$ C oder

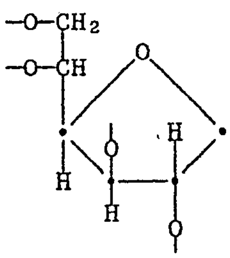

ist
wenn n 5 bedeutet, A den fünfwertigen Rest einer Hexose oder eines Hexitols darstellt und
wenn n 6 bedeutet, A die Gruppe $-(O-CH_2)_3$ $C-CH_2-O-CH_2-C-(CH_2-O)_3$ oder ein sechswertiger Rest eines Hexitols ist;

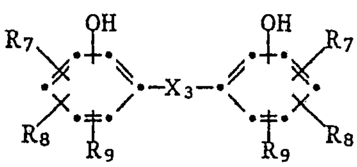 (II),

worin $R_7$, $R_8$ und $R_9$ unabhängig voneinander $C_1$-$C_{10}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind und $R_9$ zusätzlich Wasserstoff bedeutet, $X_3$ -S-, Methylen, Ethyliden, in 3-Stellung durch eine Gruppe

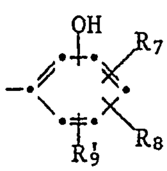

substituiertes $C_3$-$C_6$-Alkyliden,
wobei $R_7$ und $R_8$ die oben angegebenen Bedeutungen besitzen und $R_9'$ Wasserstoff ist, oder $X_3$ ferner eine Gruppe

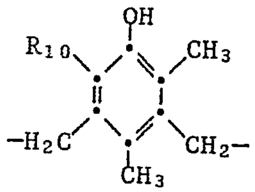

(A-1)

bedeutet, wobei $R_{10}$ $C_1$-$C_{10}$-Alkyl oder $C_5$-$C_{12}$-Cycloalkyl ist;

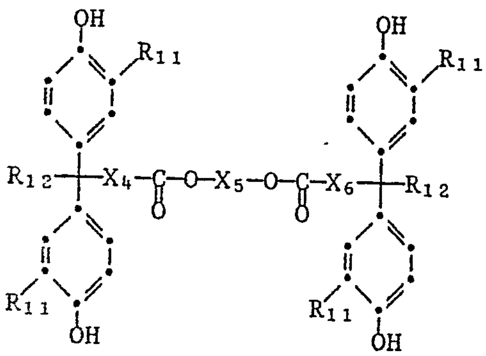

(III),

worin die Reste $R_{11}$ unabhängig voneinander $C_1$-$C_{10}$-Alkyl, $C_5$-$C_{12}$-Cycloalkyl oder durch $C_1$-$C_4$-Alkyl substituiertes $C_5$-$C_7$-Cycloalkyl sind, die Reste $R_{12}$ Methyl bedeuten, $X_4$ und $X_6$ unabhängig voneinander Methylen oder Ethylen sind und $X_5$ $C_2$-$C_{10}$-Alkylen ist;

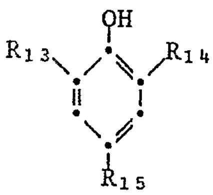

(IV),

worin $R_{13}$ und $R_{14}$ unabhängig voneinander $C_1$-$C_{10}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind und $R_{14}$ zusätzlich Wasserstoff oder $-CH_2SR_{16}$ bedeutet, $R_{15}$ $C_1$-$C_{12}$-Alkyl oder $-CH_2SR_{16}$ ist, $R_{16}$ $C_4$-$C_{18}$-Alkyl, Phenyl, $C_7$-$C_{10}$-Phenylalkyl oder eine Gruppe $-X_7-\underset{\parallel \atop O}{C}OR_{17}$ ist, wobei $X_7$ Methylen oder Ethylen und $R_{17}$ $C_1$-$C_{24}$-Alkyl darstellen, und

c) mindestens eine Verbindung der Formel V, VI, VII oder/und VIII,

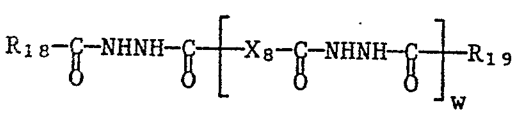

(V)

worin w 0 oder 1 bedeutet, $X_8$ eine direkte Bindung, $C_1$-$C_{18}$-Alkylen, Phenylen oder eine Gruppe $-X_9-\underset{\parallel \atop O}{C}-O-X_{10}-O-\underset{\parallel \atop O}{C}-X_{11}-$ darstellt, wobei $X_9$ und $X_{11}$ unabhängig voneinander eine direkte Bindung oder $C_1$-$C_{10}$-Alkylen sind und $X_{10}$ $C_2$-$C_{20}$-Alkylen, durch Schwefel oder Sauerstoff unterbrochenes $C_4$-$C_{10}$-Alkylen oder Phenylen ist, $R_{18}$ und $R_{19}$ unabhängig voneinander $C_1$-$C_{18}$-Alkyl, durch Schwefel unterbrochenes $C_5$-$C_{18}$-Alkyl, $C_1$-$C_{18}$-Alkyloxy, Phenyl, durch OH und/oder $C_1$-$C_4$-Alkoxy substituiertes Phenyl, $C_7$-$C_{10}$-Phenylalkyl oder eine Gruppe der Formel A-2, A-3 oder A-4 bedeuten,

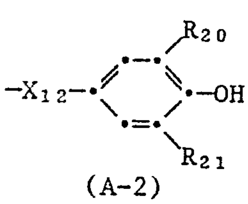 , 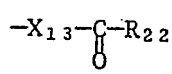 , 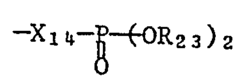

(A-2) (A-3) (A-4)

wobei $X_{12}$ eine direkte Bindung, Methylen, Ethylen oder eine Gruppe $-CH_2-$ CH-
R
ist und R $C_1$-$C_8$-Alkyl bedeutet, $R_{20}$ und $R_{21}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $X_{13}$ eine direkte Bindung, $C_1$-$C_{10}$-Alkylen, durch Schwefel unterbrochenes $C_2$-$C_4$-Alkylen oder Phenylen ist, $R_{22}$ $C_1$-$C_{18}$-Alkyl oder $C_1$-$C_{18}$-Alkyloxy bedeutet, $X_{14}$ $C_1$-$C_2$-Alkylen und $R_{23}$ $C_1$-$C_{18}$-Alkyl sind;

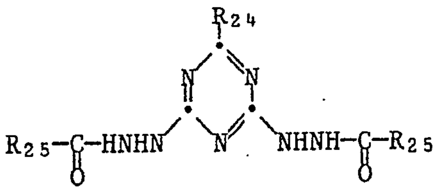 (VI),

worin $R_{24}$ Di($C_1$-$C_{12}$-alkyl)amino oder eine Gruppe -NHNH- C -$R_{25}$
O
ist und die Reste $R_{25}$ unabhängig voneinander $C_1$-$C_{18}$-Alkyl, durch Schwefel unterbrochenes $C_5$-$C_{18}$-Alkyl, $C_1$-$C_{18}$-Alkyloxy, Phenyl, durch OH und/oder $C_1$-$C_4$-Alkoxy substituiertes Phenyl, $C_7$-$C_{10}$-Phenylalkyl, eine Gruppe der Formel A-2, A-3 oder A-4 bedeuten,

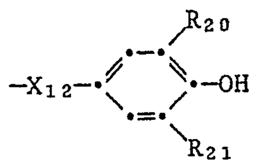 , 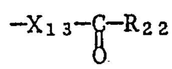 , 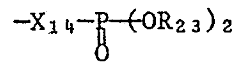

(A-2) (A-3) (A-4)

wobei $X_{12}$ eine direkte Bindung, Methylen, Ethylen oder eine Gruppe $-CH_2-$ CH-
R
ist und R $C_1$-$C_8$-Alkyl bedeutet, $R_{20}$ und $R_{21}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $X_{13}$ eine direkte Bindung, $C_1$-$C_{10}$-Alkylen, durch Schwefel unterbrochenes $C_2$-$C_4$-Alkylen oder Phenylen ist, $R_{22}$ $C_1$-$C_{18}$-Alkyl oder $C_1$-$C_{18}$-Alkyloxy bedeutet, $X_{14}$ $C_1$-$C_2$-Alkylen und $R_{23}$ $C_1$-$C_{18}$-Alkyl sind;

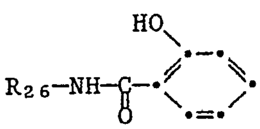 (VII),

worin $R_{26}$ eine Gruppe der Formel A-5, A-6 oder A-7 darstellt,

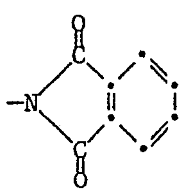 , 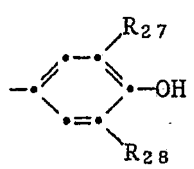 , 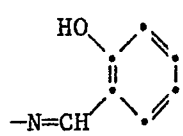

(A-5) (A-6) (A-7)

wobei $R_{27}$ und $R_{28}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind;

O
($R_{29}$-HNHN-C $)_x$ D (VIII),
worin $R_{29}$ Wasserstoff, $C_2$-$C_{18}$-Alkanoyl, $C_3$-$C_{20}$-Alkenoyl oder eine Gruppe der Formel A-8

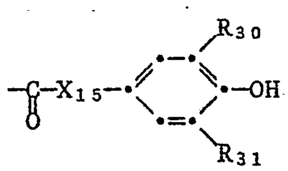 (A-8)

bedeutet, worin $X_{15}$ eine direkte Bindung, Methylen, Ethylen oder eine Gruppe $-CH_2-$ CH-
R

ist und R $C_1$-$C_8$-Alkyl bedeutet und $R_{30}$ und $R_{31}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, x 3 oder 4 bedeutet, wenn x 3 ist, D eine Gruppe

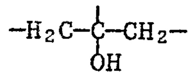

darstellt und wenn x 4 ist, D eine Gruppe

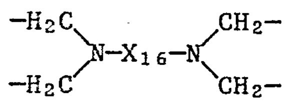

oder/und eine polymere Verbindung mit einer mittleren Molekulargewichtszahl (Die mittlere Molekulargewichtszahl wird mit Hilfe der Gelpermeations-Chromatographie (GPC) bestimmt.) von 500 bis 10 000 und den wiederkehrenden Struktureinheiten der Formel IX,

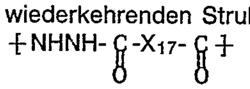 (IX)

worin $X_{17}$ eine direkte Bindung, $C_1$-$C_{10}$-Alkylen, durch Schwefel unterbrochenes $C_4$-$C_{10}$-Alkylen oder Phenylen bedeutet, wobei $X_{17}$ in den einzelnen Struktureinheiten die gleichen oder unterschiedliche Bedeutungen besitzt.

$R_7$, $R_8$, $R_9$, $R_{10}$, $R_{11}$, $R_{13}$ und $R_{14}$ bedeuten als $C_1$-$C_{10}$-Alkyl z.B. Methyl, Ethyl, Propyl, Isopropyl, Butyl, tert-Butyl, Pentyl, Hexyl, Nonyl oder Decyl. $C_1$-$C_4$-Alkyl, insbesondere Methyl und tert-Butyl, sind bevorzugt. Verzweigte Alkylreste sind von besonderem Interesse.

R′ und $R_{15}$ können als $C_1$-$C_{12}$-Alkyl z.B. die für $R_7$ als $C_1$-$C_{10}$-Alkyl angegebenen spezifischen Bedeutungen besitzen und zusätzlich noch Dodecyl sein.

$R_1$, $R_2$, $R_{18}$, $R_{19}$, $R_{20}$, $R_{21}$, $R_{22}$, $R_{23}$, $R_{25}$, $R_{27}$, $R_{28}$, $R_{30}$ und $R_{31}$ können als $C_1$-$C_{18}$-Alkyl z.B. die für $R_7$ als $C_1$-$C_{10}$-Alkyl angegebenen spezifischen Bedeutungen besitzen und zusätzlich noch Dodecyl, Tetradecyl, Hexadecyl oder Octadecyl sein. $R_1$, $R_2$, $R_{20}$, $R_{21}$, $R_{30}$ und $R_{31}$ sind bevorzugt $C_1$-$C_4$-Alkyl, insbesondere Methyl und tert-Butyl.

$R_3$, $R_4$, $R_5$ und $R_{17}$ können als $C_1$-$C_{24}$-Alkyl z.B. die für $R_{18}$ angegebenen spezifischen Bedeutungen besitzen und zusätzlich noch Icosan, Henicosan, Docosan oder Tetracosan sein. $C_{10}$-$C_{18}$-Alkyl ist bevorzugt.

$R_6$ bedeutet als $C_1$-$C_4$-Alkyl z.B. Methyl, Ethyl, Propyl, Isopropyl, n-Butyl oder tert-Butyl. Methyl ist bevorzugt.

$R_{16}$ bedeutet als $C_4$-$C_{18}$-Alkyl z.B. Butyl, Isobutyl, Pentyl, Hexyl, Nonyl, Decyl, Undecyl, Dodecyl oder Octadecyl.

R bedeutet als $C_1$-$C_8$-Alkyl z.B. Methyl, Ethyl, Propyl, Butyl, Hexyl oder Octyl. Methyl ist bevorzugt.

$R_1$, $R_2$, $R_3$, $R_4$, $R_5$, $R_7$, $R_8$, $R_9$, $R_{10}$, $R_{11}$, $R_{13}$, $R_{14}$, $R_{20}$, $R_{21}$, $R_{27}$, $R_{28}$, $R_{30}$ und $R_{31}$ bedeuten als $C_5$-$C_{12}$-Cycloalkyl z.B. Cyclopentyl, Cyclohexyl, Cycloheptyl, Cyclooctyl, Cyclononyl, Cyclodecyl oder Cyclododecyl. $C_5$-$C_7$-Cycloalkyl, insbesondere Cyclohexyl ist bevorzugt.

$R_1$, $R_2$, $R_3$, $R_4$, $R_5$, $R_7$, $R_8$, $R_9$, $R_{11}$, $R_{13}$, $R_{14}$, $R_{20}$, $R_{21}$, $R_{27}$, $R_{28}$, $R_{30}$ und $R_{31}$ bedeuten als $C_5$-$C_7$-Cycloalkyl, welches durch $C_1$-$C_4$-Alkyl, bevorzugt Methyl, substituiert ist, z.B. Methylcyclohexyl.

$R_1$, $R_2$, $R_7$, $R_8$, $R_9$, $R_{13}$, $R_{14}$, $R_{16}$, $R_{18}$, $R_{19}$, $R_{20}$, $R_{21}$, $R_{25}$, $R_{27}$, $R_{28}$, $R_{30}$ und $R_{31}$ bedeuten als $C_7$-$C_{10}$-Phenylalkyl z.B. Benzyl, α-Methylbenzyl oder α,α-Dimethylbenzyl. Benzyl ist bevorzugt.

$R_{18}$, $R_{19}$ und $R_{25}$ bedeuten als $C_5$-$C_{18}$-Alkyl, welches durch -S-unterbrochen ist, z.B. 2-Thiapentyl, 2-Thiahexyl, 2-Thiaoctyl, 2-Thiadecyl, 2-Thiadodecyl, 2-Thiaoctadecyl, 3-Thiahexyl, 3-Thiaoctyl, 3-Thiadecyl oder 3-Thiaoctadecyl. Das Schwefelatom befindet sich bevorzugt in 2- oder 3-Stellung.

$R_{18}$, $R_{19}$, $R_{22}$ und $R_{25}$ bedeuten als $C_1$-$C_{18}$-Alkoxy z.B. Methoxy, Ethoxy, Propoxy, Butoxy, Pentyloxy, Hexyloxy, Nonyloxy, Decyloxy, Dodecyloxy, Hexadecyloxy oder Octadecyloxy.

$R_{18}$, $R_{19}$ und $R_{25}$ bedeuten als Phenyl, welches durch OH und/oder $C_1$-$C_4$-Alkoxy substituiert ist, bevorzugt 2-Hydroxyphenyl oder 2-Methoxyphenyl.

$R_{24}$ bedeutet als Di($C_1$-$C_{12}$-alkyl)amino z.B. Dimethylamino, Diethylamino, Dibutylamino, Dioctylamino oder Didecylamino. Di($C_2$-$C_8$-alkyl)amino ist bevorzugt. Besonders bevorzugt ist Di(isooctyl)amino.

$R_{29}$ bedeutet als $C_2$-$C_{18}$-Alkanoyl z.B. Ethanoyl, Propanoyl, Butanoyl, Pentanoyl, 3-Methylbutanoyl, Dodecanoyl, Tetradecanoyl, Hexadecanoyl oder Octadecanoyl. $C_2$-$C_{10}$-Alkanoyl ist bevorzugt.

$R_{29}$ bedeutet als $C_3$-$C_{20}$-Alkenoyl z.B. Acryloyl, Methacryloyl, Crotonoyl oder Oleolyl. $C_{10}$-$C_{20}$-Alkenoyl, insbesondere Oleolyl, ist bevorzugt.

$R_6$ bedeutet als ($C_1$-$C_{18}$-Alkyl)amido z.B. $H_3C$-CO-NH-, $H_5C_2$-CO-NH-, $H_{13}C_6$-CO-NH- oder $H_{37}C_{18}$-CO-NH-.

$X_1$, $X_2$, $X_5$ und $X_{10}$ sind als $C_2$-$C_{10}$-Alkylen z.B. Ethylen, Trimethylen, Tetramethylen, 2,2-Dimethyltrimethylen, Hexamethylen, Octamethylen, Nonamethylen oder Decamethylen.

$X_9$, $X_{11}$, $X_{13}$ und $X_{17}$ können als $C_1$-$C_{10}$-Alkylen ausser den für $X_1$ als $C_2$-$C_{10}$-Alkylen angegebenen

Beispielen auch Methylen bedeuten. $X_1$, $X_2$, $X_5$ und $X_{10}$ bedeuten bevorzugt $C_2$-$C_6$-Alkylen, insbesondere Ethylen.

$X_8$ kann als $C_1$-$C_{18}$-Alkylen z.B. ausser den für $X_1$ als $C_2$-$C_{10}$-Alkylen angegebenen spezifischen Bedeutungen auch Methylen, Dodecamethylen oder Octadecamethylen sein, wobei $C_2$-$C_6$-Alkylen bevorzugt ist.

$X_{14}$ bedeutet als $C_1$-$C_2$-Alkylen z.B. Methylen oder Ethylen.

$X_8$, $X_{10}$, $X_{13}$ und $X_{17}$ bedeuten als Phenylen bevorzugt 1,4-Phenylen.

$X_{10}$ bedeutet als $C_4$-$C_{10}$-Alkylen, welches durch -S- oder -O- unterbrochen ist, bevorzugt $-CH_2CH_2-S-CH_2CH_2-$, $-CH_2CH_2-O-CH_2CH_2-$, $-(CH_2CH_2-O)_2-CH_2CH_2-$, $-(CH_2CH_2-O)_3-CH_2CH_2-$ oder $-(CH_2CH_2-O)_4-CH_2CH_2-$.

$X_{13}$ bedeutet als $C_2$-$C_4$-Alkylen, welches durch -S- unterbrochen ist, z.B. $-CH_2-S-CH_2-$, $-CH_2-S-CH_2CH_2-$, $-CH_2CH_2-S-CH_2-$ oder $-CH_2CH_2-S-CH_2CH_2-$.

$X_{17}$ bedeutet als $C_4$-$C_{10}$-Alkylen, welches durch -S- unterbrochen ist, bevorzugt $-CH_2CH_2-S-CH_2CH_2-$.

$X_3$ bedeutet als $C_3$-$C_6$-Alkyliden, welches in 3-Stellung durch

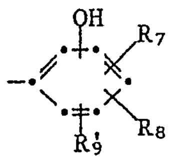

substituiert ist, bevorzugt die Gruppe

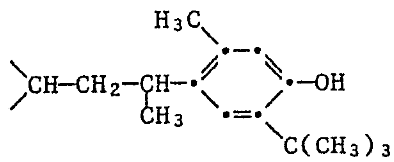

t ist bevorzugt 2 und v bedeutet bevorzugt 2, 3 oder 4.

Bedeutet A für n = 1-5 einen n-wertigen Rest einer Hexose, so leitet sich dieser z.B. von Allose, Altrose, Glucose, Mannose, Gulose, Idose, Galaktose oder Talose ab, d.h. um die entsprechenden Verbindungen der Formel I zu erhalten, müssen eine, zwei, drei, vier oder fünf -OH Gruppen durch die Estergruppe E-1,

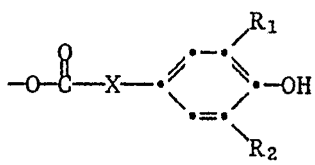

(E-1)

worin $R_1$, $R_2$ und X die oben angegebenen Bedeutungen haben, ersetzt werden. So kann A z.B. für n = 5 eine Gruppe

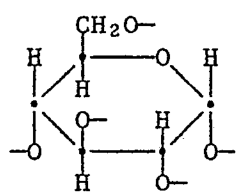

bedeuten.

Stellt A den n-wertigen Rest eines Hexitols dar, so erhält man die entsprechenden Verbindungen der Formel I, indem n -OH Gruppen durch die oben angegebene Estergruppe E-1 ersetzt werden. A kann als sechswertiger Rest eines Hexitols z.B.

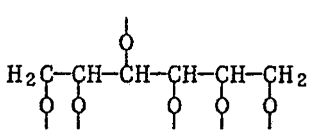

sein. Diese Gruppe leitet sich von dem D-Sorbitol ab.

In den erfindungsgemässen Zusammensetzungen kann die Komponente b) z.B. auch ein Gemisch aus den ein-, zwei-, drei-, vier- oder fünffach veresterten Hexosen bzw. ein Gemisch aus den n-fach veresterten Hexitolen darstellen.

Die Endgruppen der polymeren Verbindungen mit den wiederkehrenden Struktureinheiten der Formel IX können in Abhängigkeit von dem verwendeten Herstellungsverfahren unterschiedliche Bedeutungen haben. Stellt man z.B. die polymeren Verbindungen in an sich bekannter Weise durch Umsetzung von $H_2N\text{-}NH_2$ mit

$$R_{32}\text{-}\underset{\displaystyle \text{O}}{\underset{\|}{\text{C}}}\text{-}X_{17}\text{-}\underset{\displaystyle \text{O}}{\underset{\|}{\text{C}}}\text{-}R_{32}$$

her, so ist die Endgruppe, die an den Hydrazinrest gebunden ist $-\underset{\displaystyle \text{O}}{\underset{\|}{\text{C}}}\text{-}X_{17}\text{-}\underset{\displaystyle \text{O}}{\underset{\|}{\text{C}}}\text{-}R_{32}$ und die Endgruppe, die an den Carbonylrest gebunden ist - $R_{32}$. $R_{32}$ bedeutet z.B. Cl, OH oder $C_1$-$C_8$-Alkoxy, bevorzugt Cl.

Die erfindungsgemässen Zusammensetzungen enthalten neben dem zu stabilisierenden Substrat a) eine Kombination aus mindestens einer Verbindung der Formeln I bis IV und mindestens einer Verbindung der Formeln V bis VIII oder einer polymeren Verbindung mit der wiederkehrenden Struktureinheit der Formel IX. Beispiele für solche Kombinationen sind: I + V, I + VI, I + VII, I + VIII, II + V, II + VI, II + VII, II + VIII, III + V, III + VI, III + VII, III + VIII, IV + V, IV + VI, IV + VII, IV + VIII und polymere Verbindungen mit der wiederkehrenden Struktureinheit der Formel IX + I, II, III oder IV.

Bevorzugt sind Zusammensetzungen enthaltend als Komponente b) mindestens eine Verbindung der Formel I, worin $R_1$ und $R_2$ unabhängig voneinander $C_1$-$C_4$-Alkyl, Cyclohexyl, Phenyl oder $\alpha,\alpha$-Dimethylbenzyl bedeuten, X Ethylen bedeutet und n 1, 2, 3, 4 oder 6 ist und
wenn n 1 ist, A $C_1$-$C_{18}$-Alkyloxy oder $C_1$-$C_8$-Alkylamino darstellt,
wenn n 2 ist, A eine Gruppe $-O-X_1-O-$, $-NH-X_2-NH-$ oder $-O\!\leftarrow\!CH_2CH_2\text{-}O\!\rightarrow_v$ darstellt, worin $X_1$ $C_2$-$C_6$-Alkylen oder 3-Thiapentan-1,5 diyl bedeutet, $X_2$ $C_2$-$C_6$-Alkylen ist und v 2, 3 oder 4 ist,
wenn n 3 bedeutet, A die Gruppe $\leftarrow\!O\text{-}CH_2\!\rightarrow_3 C\text{-}CH_3$ darstellt,
wenn n 4 bedeutet, A die Gruppe $\leftarrow\!O\text{-}CH_2\!\rightarrow_4 C$ ist und
wenn n 6 bedeutet, A die Gruppe $\leftarrow\!O\text{-}CH_2\!\rightarrow_3 C\text{-}CH_2\text{-}O\text{-}CH_2\text{-}C\!\leftarrow\!CH_2\text{-}O\!\rightarrow_3$ darstellt,
oder/und eine Verbindung der Formel II, worin $X_3$ Methylen, eine Gruppe der Formel A-1, -S-, Butyliden oder eine Gruppe der Formel A-9

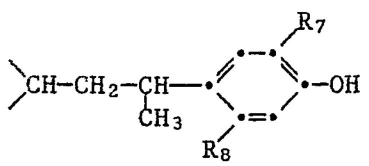

(A-9)

bedeutet und
wenn $X_3$ Methylen ist, $R_7$ und $R_8$ unabhängig voneinander $C_1$-$C_{10}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_9$ Wasserstoff oder $C_1$-$C_4$-Alkyl ist,
wenn $X_3$ eine Gruppe der Formel A-1 ist, $R_7$ und $R_8$ unabhängig voneinander $C_1$-$C_{10}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_9$ Wasserstoff ist und $R_{10}$ $C_1$-$C_4$-Alkyl oder Cyclohexyl darstellt, und
wenn $X_3$ -S-, Butyliden oder eine Gruppe der Formel A-9 bedeutet, $R_7$ $C_1$-$C_4$-Alkyl oder Cyclohexyl ist, $R_8$ Methyl oder Ethyl darstellt und $R_9$ Wasserstoff bedeutet,
oder/und eine Verbindung der Formel III, worin $R_{11}$ $C_1$-$C_4$-Alkyl oder Cyclohexyl bedeutet, $R_{12}$ Methyl ist, $X_4$ und $X_6$ Methylen sind und $X_5$ Ethylen ist,
oder/und eine Verbindung der Formel IV, worin $R_{13}$ $C_1$-$C_4$-Alkyl ist, $R_{14}$ Wasserstoff, $C_1$-$C_4$-Alkyl oder eine Gruppe $-CH_2SR_{16}$ bedeutet, $R_{15}$ Methyl, Dodecyl oder $-CH_2SR_{16}$ ist und $R_{16}$ $C_4$-$C_{18}$-Alkyl oder ($C_1$-$C_{18}$-Alkyl)oxycarbonylmethyl darstellt.

Ebenfalls bevorzugt sind Zusammensetzungen enthaltend als Komponente c) mindestens eine Verbindung der Formel V, worin $X_8$ eine direkte Bindung, $C_2$-$C_6$-Alkylen oder Phenylen ist, $R_{18}$ und $R_{19}$ unabhängig voneinander $C_1$-$C_{18}$-Alkyl, $C_1$-$C_{18}$-Alkyloxy, Phenyl, durch -OH under/oder $C_1$-$C_4$-Alkoxy substituiertes Phenyl oder eine Gruppe der Formel A-2 bedeuten,
oder/und eine Verbindung der Formel VI, worin $R_{24}$ Di($C_2$-$C_8$-alkyl)amino oder eine Gruppe $-NHNH-\underset{\displaystyle \text{O}}{\underset{\|}{\text{C}}}-R_{25}$ bedeutet und $R_{25}$ $C_1$-$C_{18}$-Alkyl, Phenyl, durch -OH und/oder $C_1$-$C_4$-Alkoxy substituiertes Phenyl oder eine Gruppe der Formel A-2 darstellt,
oder/und eine Verbindung der Formel VII, worin $R_{26}$ eine Gruppe der Formel A-5 oder A-6 ist, wobei $R_{27}$ und $R_{28}$ unabhängig voneinander $C_1$-$C_4$-Alkyl oder Cyclohexyl bedeuten,
oder/und eine Verbindung der Formel VIII, worin $R_{29}$ Wasserstoff, $C_2$-$C_{10}$-Alkanoyl, $C_{10}$-$C_{20}$-Alkenoyl oder eine Gruppe der Formel A-8 bedeutet, wobei $X_{15}$ Ethylen ist und $R_{30}$ und $R_{31}$ unabhängig voneinander $C_1$-$C_4$-Alkyl oder Cyclohexyl sind,
oder/und eine polymere Verbindung mit einer mittleren Molekulargewichtszahl von 500 bis 10 000 und den wiederkehrenden Struktureinheiten der Formel IX worin $X_{17}$ eine direkte Bindung, $C_1$-$C_6$-Alkylen oder 3-Thiapentan-1,5-diyl ist.

Besonders bevorzugt sind Zusammensetzungen enthaltend als Komponente b) mindestens eine Verbindung der Formel I, worin $R_1$ Methyl oder tert-Butyl ist, $R_2$ tert-Butyl darstellt, X Ethylen bedeutet und n

1, 2 oder 4 ist und
wenn n 1 ist, A $C_{10}$-$C_{18}$-Alkyloxy bedeutet,
wenn n 2 ist, A eine Gruppe $-O-(CH_2)_6-O-$, $-O-CH_2CH_2-S-CH_2CH_2-O-$ oder $-O\!+\!CH_2CH_2-O\!+_3$ darstellt und
wenn n 4 ist, A $+O-CH_2+_4$ C bedeutet.

Ebenfalls besonders bevorzugt sind Zusammensetzungen enthaltend als Komponente c) mindestens eine Verbindung der Formel V, worin $X_8$ eine direkte Bindung, Tetramethylen oder Phenylen ist, $R_{18}$ und $R_{19}$ unabhängig voneinander $C_1$-$C_{18}$-Alkyl, $C_1$-$C_{18}$-Alkyloxy, durch OH oder Methoxy substituiertes Phenyl oder eine Gruppe der Formel A-2 darstellen, worin $X_{12}$ Ethylen ist und $R_{20}$ und $R_{21}$ unabhängig voneinander $C_1$-$C_4$-Alkyl bedeuten.

Besonders bevorzugt sind auch Zusammensetzungen enthaltend als Komponente c) mindestens eine Verbindung der Formel VI, worin $R_{24}$ Di($C_2$-$C_8$-alkyl)amino oder eine Gruppe $-NHNH-\underset{\underset{O}{\|}}{C}-R_{25}$ bedeutet und $R_{25}$ $C_1$-$C_{10}$-Alkyl oder Phenyl bedeutet.

Von Interesse sind auch Zusammensetzungen enthaltend als Komponente c) mindestens eine Verbindung der Formel VIII, worin $R_{29}$ Wasserstoff oder Oleolyl bedeutet, x 4 ist und D eine Gruppe

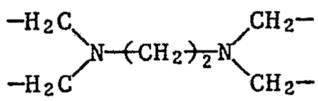

Ebenfalls von Interesse sind Zusammensetzungen enthaltend als Komponente b) mindestens eine Verbindung der Formel I, II oder/und III und als Komponente c) mindestens eine Verbindung der Formel V oder/und VI.

Von besonderem Interesse sind Zusammensetzungen enthaltend als Komponente b) mindestens eine Verbindung der Formel I oder/und II und als Komponente c) mindestens eine Verbindung der Formel V.

Die Komponente a) ist bevorzugt ein Acrylnitril-Butadien-Styrol Copolymer (ABS) und insbesondere ein schlagfestes Polystyrol.

<u>Beispiele für Verbindungen der Formel I sind:</u>

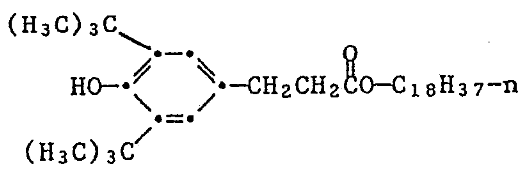

(I-A),

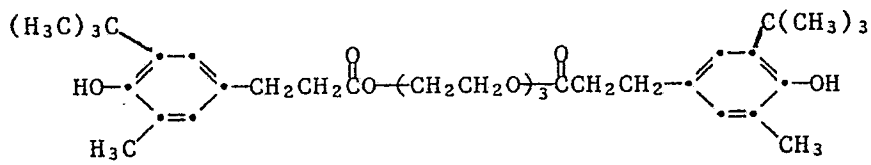

(I-B),

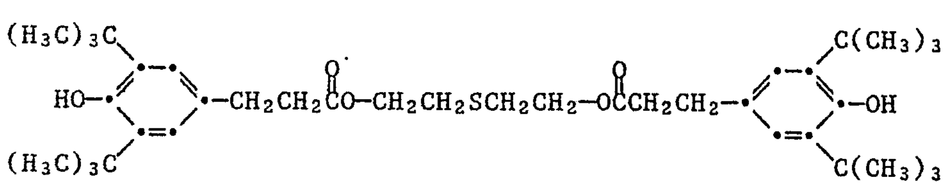

(I-C),

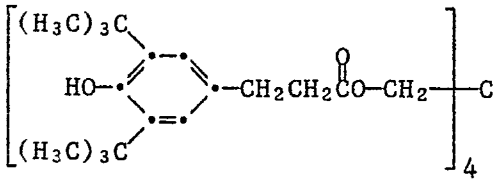

(I-D),

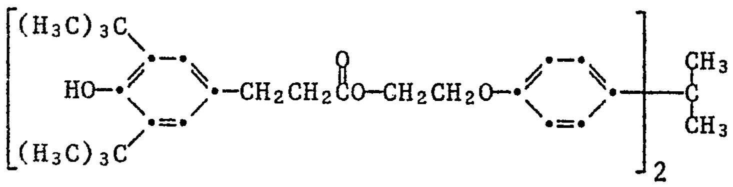

(I-E).

Die Verbindungen der Formeln I-A, I-B, I-C und I-D sind bevorzugt.

Eine weitere Bevorzugung für Verbindungen der Formel II sind die Verbindungen der Formeln II-A, II-B, II-C und II-D,

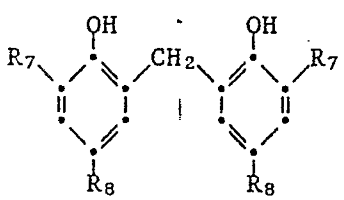

(II-A)

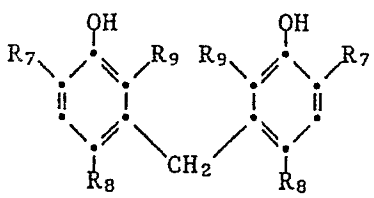

(II-B)

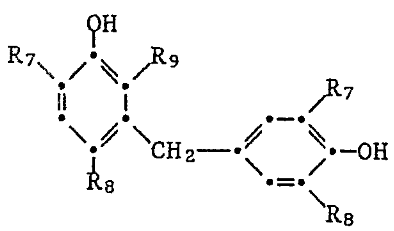

(II-C)

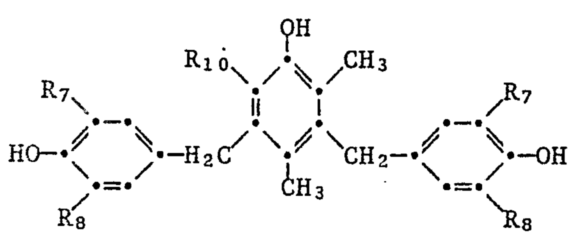

(II-D)

worin $R_7$ und $R_8$ unabhängig voneinander $C_1$-$C_{10}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_9$ $C_1$-$C_4$-Alkyl ist und $R_{10}$ $C_1$-$C_4$-Alkyl oder

Cyclohexyl darstellt, sowie Verbindungen der Formeln II-E, II-F und II-G,

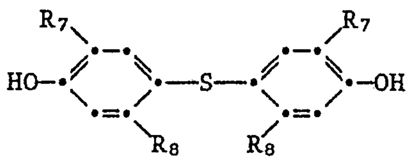

(II-E)

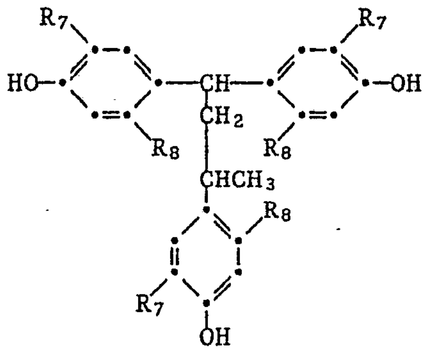

(II-F)

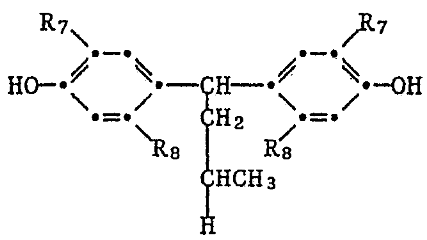

(II-G)

worin $R_7$ $C_1$-$C_4$-Alkyl oder Cyclohexyl bedeutet und $R_8$ Methyl oder Ethyl ist.

Beispiele für Verbindungen der Formel II sind:

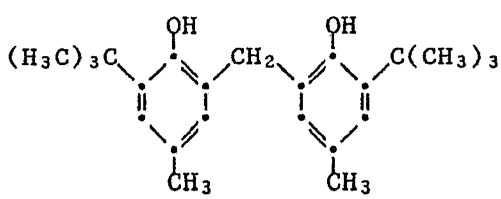

(II-A-1),

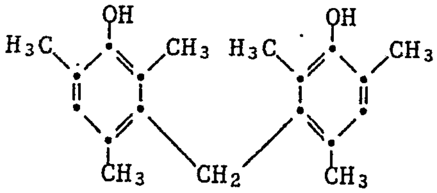 (II-B-1),

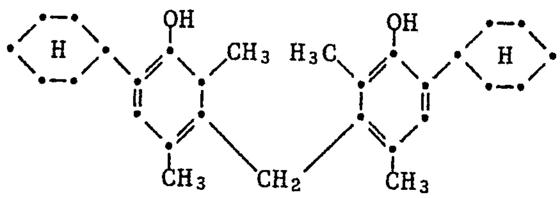 (II-B-2),

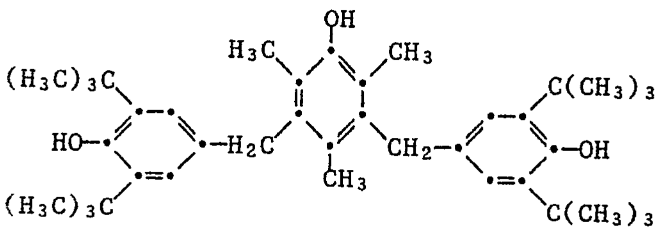 (II-D-1),

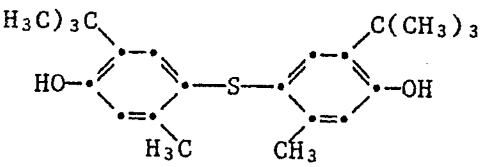 (II-E-1),

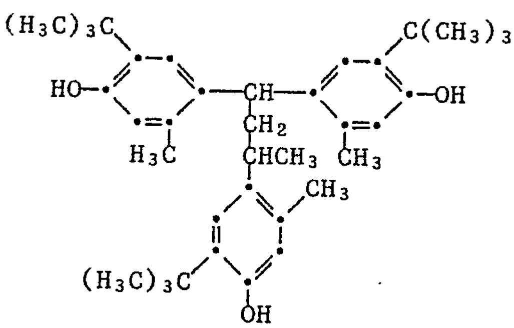 (II-F-1),

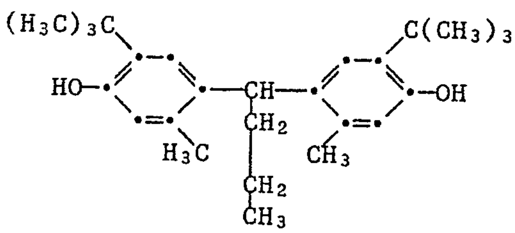 (II-G-1).

Ein bevorzugtes Beispiel für Verbindungen der Formel III ist:

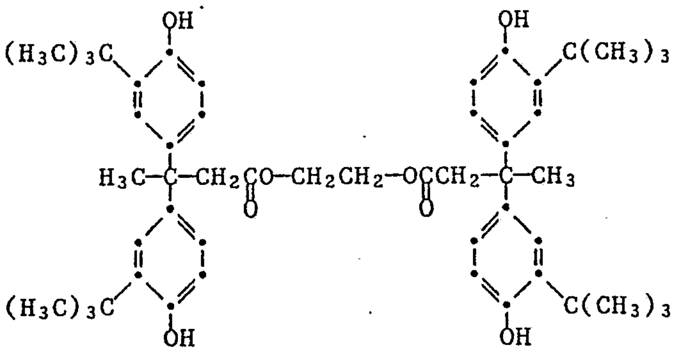

(III-A).

Beispiele für Verbindungen der Formel IV sind:

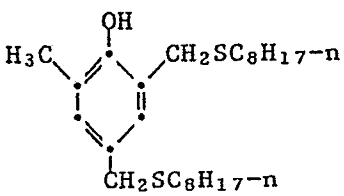

(IV-A),

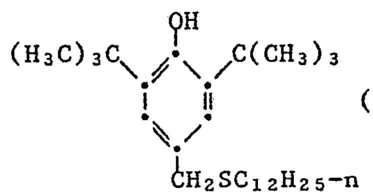

(IV-B),

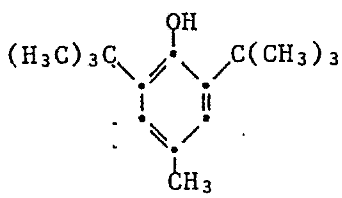

(IV-C).

Beispiele für Verbindungen der Formel V sind:

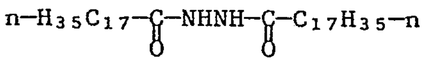 (V-A),

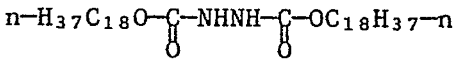 (V-B),

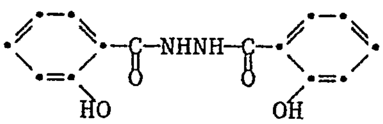 (V-C),

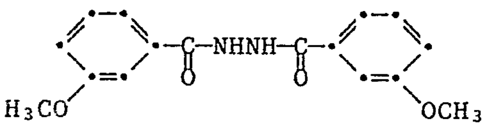 (V-D),

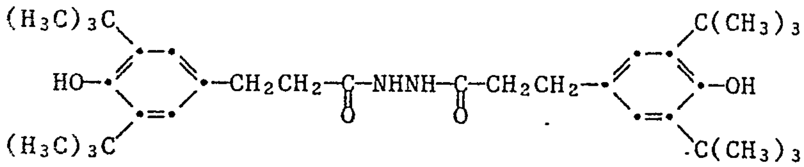 (V-E),

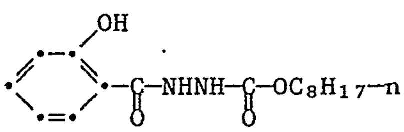 (V-F),

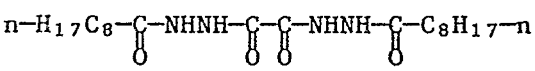 (V-G),

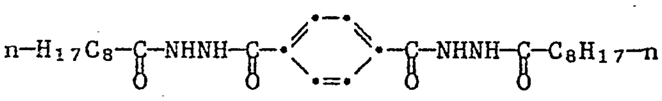 (V-H),

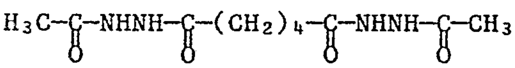 (V-I),

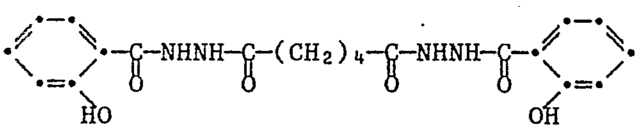 (V-J).

Die Verbindungen der Formeln (V-G) und (V-I) sind bevorzugt.

Ein bevorzugtes Beispiel für Verbindungen der Formel VI ist:

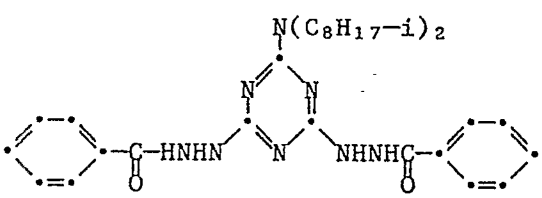 (VI-A).

Ein Beispiel für Verbindungen der Formel VII ist:

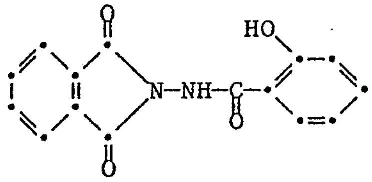

(VII-A).

Beispiele für Verbindungen der Formel VIII sind:

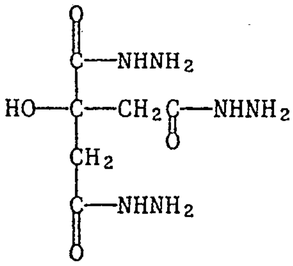

(VIII-A),

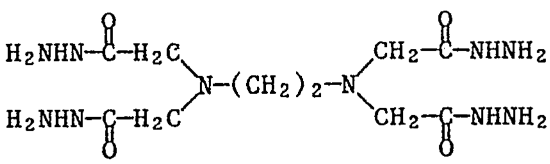

(VIII-B).

Beispiele für Struktureinheiten der Formel IX sind:

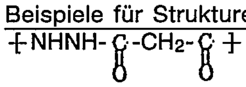 (IX-A),

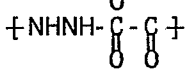 (IX-B)

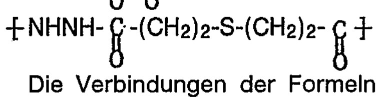 (IX-C).

Die Verbindungen der Formeln I bis VIII und die polymeren Verbindungen mit den wiederkehrenden Struktureinheiten der Formel IX können, sofern sie nicht im Handel erhältlich sind, in Analogie zu bekannten Verfahren hergestellt werden. Mögliche Herstellungsverfahren werden z.B. in den in der folgenden Tabelle angegebenen Veröffentlichungen beschrieben.

| [1)]Verbindungen der Formel | Veröffentlichung |
|---|---|
| I | GB 996 502, US 3 330 859, US 3 944 594, US 4 593 057, EP 154 518. |
| II | US 4 507 420, US 4 513 109, US 3 632 553. |
| III | US 3 960 928. |
| IV | EP 224 442, US 3 903 173. |
| V | US 3 849 492, US 3 734 885, US 3 884 874. |
| VI | US 3 850 918. |
| VII | GB 1 307 292, US 3 110 696, DE 2 438 898. |
| VIII | US 3 351 658, DE 2 225 478. |
| IX | US 4 087 405. |

[1)] Die als Ausgangsprodukte benötigen sterisch gehinderten Phenole können in Analogie zu dem in US 3 093 587 beschriebenen Verfahren hergestellt werden.

Die erfindungsgemässen Zusammensetzungen enthalten zweckmässigerweise 0,005 bis 10 %, bevorzugt 0,01 bis 5 %, insbesondere 0,01 bis 2 % eines Gemisches aus den oben beschriebenen Komponenten b) und c), bezogen auf das Gesamtgewicht des zu stabilisierenden Materials.

Das Gewichtsverhältnis Komponente b)/c) beträgt zum Beispiel $\frac{4}{1}$ bis $\frac{1}{4}$, bevorzugt $\frac{2}{1}$ bis $\frac{1}{2}$, insbesondere $\frac{2}{1}$ bis $\frac{1}{1}$.

Die Einarbeitung der Verbindungen I bis IX in das zu stabilisierende Material erfolgt zweckmässigerweise nach bekannten Methoden, beispielsweise vor oder während der Formgebung oder auch durch Aufbringen der gelösten oder dispergierten Verbindungen auf das zu stabilisierende Material, gegebenenfalls unter nachträglichem Verdunsten des Lösungsmittels. Die Verbindungen I bis IX können auch in Form eines Masterbatches, der diese beispielsweise in einer Konzentration von 2,5 bis 25 Gew.-% enthält, den zu stabilisierenden Materialien zugegeben werden.

Die Verbindungen der Formeln I bis IX können einzeln oder auch in Form eines Gemisches aus den Komponenten b) und c) dem zu stabilisierenden Material zugegeben werden.

Die stabilisierten Materialien können in verschiedenster Form angewendet werden, z.B. als Folien, Fasern, Bändchen, Formmassen, Profile oder als Bindemittel für Lacke, Klebstoffe oder Kitte.

Der erfindungsgemässen Zusammensetzungen können gegebenenfalls zusätzlich noch solche Costabilisatoren enthalten, die üblicherweise in die Substrate a) eingearbeitet werden, wie z.B. Phosphite und Phosphonite, insbesondere Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-di-tert-butylphenyl)-phosphit, Diisodecylpentaerythrit-diphosphit, Bis-(2,4-di-tert-butylphenyl)-pentaerythritdiphosphit, Tristearyl-sorbit-triphosphit, Tetrakis-(2,4-di-tert-butylphenyl)-4,4′-biphenylen-diphosphonit, 3,9-Bis-(2,4-di-tert-butylphenoxy)-2,4,8,10-tetraoxa-3,9-diphosphaspiro[5.5]undecan, oder peroxidzerstörende Verbindungen, insbesondere Ester der β-Thio-dipropionsäure, beispielsweise der Lauryl-, Stearyl-, Myristyl-oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat. Als Costabilisator ist Dilaurylthiodipropionat besonders bevorzugt.

Die vorliegende Erfindung bezieht sich nicht auf Zusammensetzungen, die Polyphenylenharzmassen in Kombination mit Polystyrol enthalten, d.h. solche Zusammensetzungen wie sie in der DE-A- 24 54 124 beschrieben werden.

Die erfindungsgemässen Stabilisatorkombinationen aus den Komponenten b) und c) verleihen den Substraten a) eine ausgezeichnete Stabilität, insbesondere gegen den Einfluss von Wärme, Sauerstoff oder/und Licht, die überraschenderweise wesentlich besser ist als jene, die durch die jeweiligen Einzelkomponenten erreicht wird.

Die folgenden Beispiele erläutern die Erfindung weiter. Alle Prozentangaben beziehen sich auf das Gewicht, sofern nicht anders angegeben.

Beispiel: Ofenalterung von schlagfestem Polystyrol

In einem Reaktionsgefäss mit Spiralrührer wird eine Styrollösung, die 8 % Polybutadien hoher Dichte, 0,05 % Di-tert-butylperoxid, 0,05 % Zinkstearat und die unten angegebenen Additive enthält, unter Stickstoff 4 Stunden auf 90° C erhitzt. Die Rührgeschwindigkeit ist so eingestellt, dass eine Polybutadienteilchengrösse von 2-4 μm erreicht wird. Der Umsatz beträgt ca. 30 %. Anschliessend wird das Polymerisat in Glasröhrchen gefüllt, die sich in einem Aluminiumblock befinden. Die Polymerisation wird 6,5 Stunden weitergeführt, wobei die Temperatur von 90° C auf 200° C steigt. Dann werden die Glasröhrchen abgekühlt und zerbrochen, um das Polymerisat zu erhalten. Das Polymer wird in 5 mm dicke Platten gepresst, welche im Vakuum 20 Minuten auf 220° C erhitzt werden, um die Monomeren aus dem Polymerisat zu entfernen. Danach werden die Platten in einer Schlagmühle gemahlen und das erhaltene Mahlgut wird extrudiert und granuliert.

Aus dem Granulat werden in einer Presse bei 180° C innerhalb von 5 Minuten Plättchen von 40 x 40 x 2 $mm^3$ hergestellt. Diese Plättchen werden in einem Umluftofen bei 80° C gealtert. In den unten angegebenen Zeitabständen wird die Vergilbung (YI) gemäss ASTM D 1925 bestimmt. Niedrige YI-Werte bedeuten eine gute Stabilisierung des Polymers.

Die folgenden Additive werden verwendet:

Verbindung I-A:

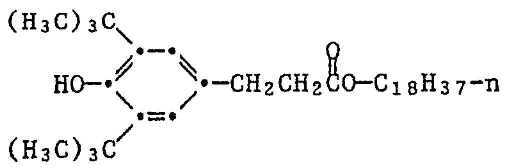

Verbindung I-B:

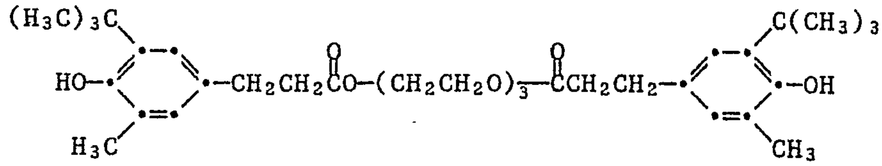

Verbindung I-D:

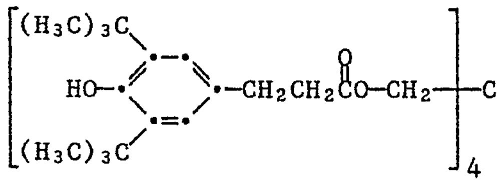

Verbindung II-A-1:

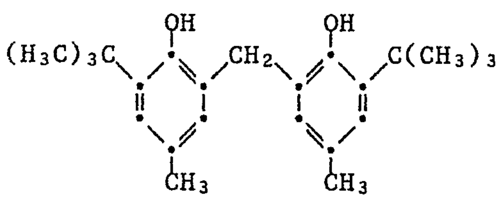

Verbindung II-E-1:

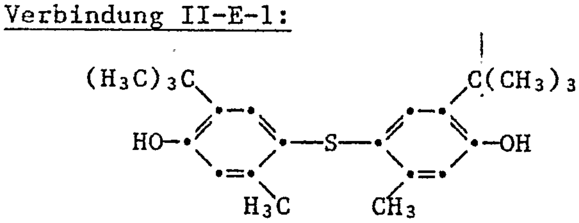

Verbindung II-F-1:

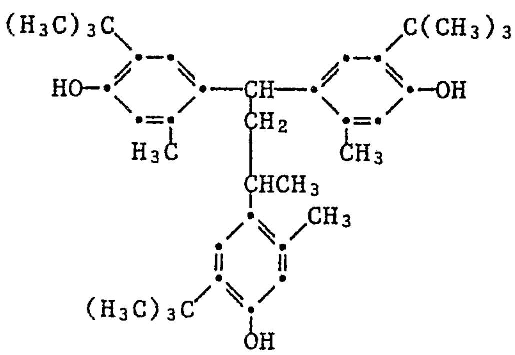

Verbindung III-A:

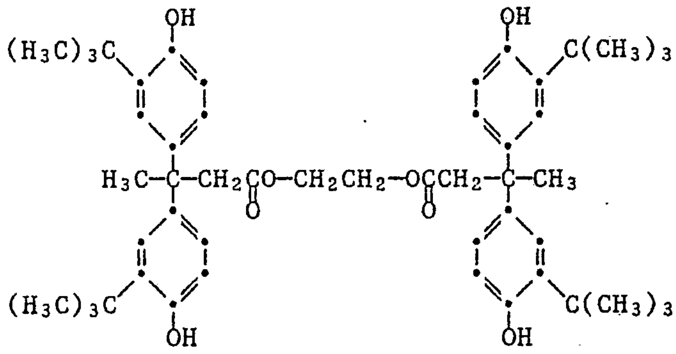

Verbindung IV-C:

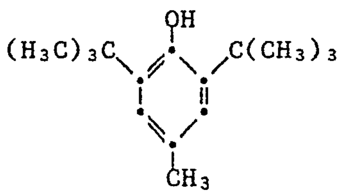

Verbindung V-A:

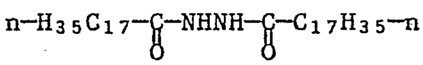

Verbindung V-C:

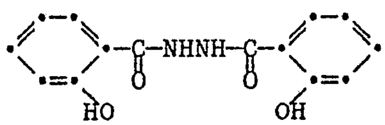

Verbindung V-E:

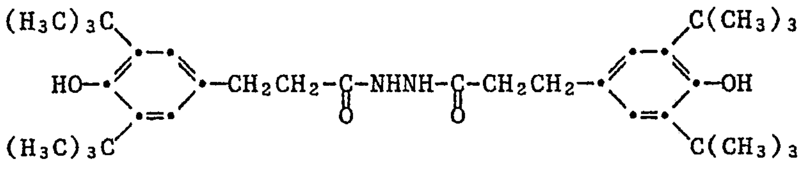

Verbindung V-F:

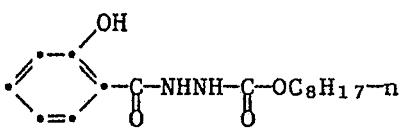

Verbindung V-G:

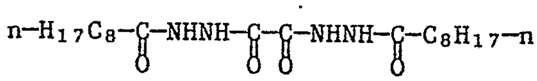

Verbindung V-H:

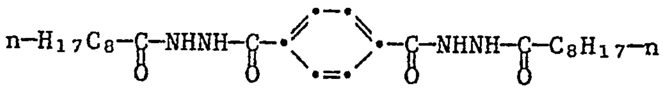

Verbindung V-I:

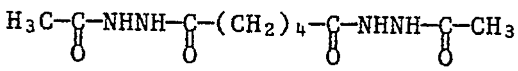

Verbindung V-J:

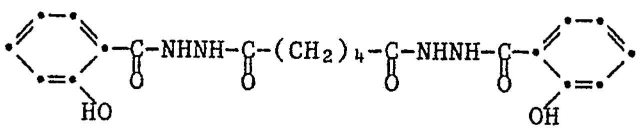

Verbindung VI-A:

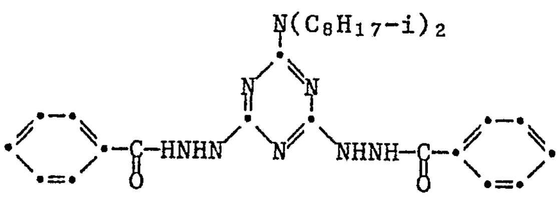

Tabelle 1a:

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-I | 0 | 3 | 8 | 20 | 48 | 64 | 73 |
| 0,05 % Verbindung I-B plus 0,05 % Verbindung V-I | 0 | 1 | 3 | 6 | 8 | 11 | 14 |

Tabelle 1b

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung I-A | 2 | 4 | 7 | 10 | 13 | 19 | 25 |
| 0,05 % Verbindung V-I plus 0,05 % Verbindung I-A | -1 | 0 | 3 | 5 | 8 | 12 | 17 |

Tabelle 1c

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-E | 4,0 | 4,6 | 6 | 10 | 12 | 17 | 21 |
| 0,05 % Verbindung I-B plus 0,05 % Verbindung V-E | 1,9 | 3,4 | 5 | 7 | 9 | 15 | 19 |

Tabelle 1d

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung II-A-I | 11,6 | 7,7 | 63 | 50 | 48 | 57 | 67 |
| 0,05 % Verbindung V-I plus 0,05 % Verbindung II-A-I | 2,7 | 3,3 | 5 | 7 | 8 | 11 | 15 |

Tabelle 1e

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung II-F-I | 3,3 | 12,2 | 21 | 27 | 33 | 50 | 63 |
| 0,05 % Verbindung V-I plus 0,05 % Verbindung II-F-I | 0,1 | 2,2 | 4 | 5 | 7 | 10 | 14 |

Tabelle 1f

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung I-D | 4,3 | 6,7 | 8 | 12 | 14 | 20 | 28 |
| 0,05 % Verbindung V-I plus 0,05 % Verbindung I-D | 0,8 | 1,3 | 4 | 5 | 8 | 12 | 16 |

Tabelle 1g

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung III-A | 2,4 | 9,4 | 17 | 27 | 38 | 55 | 68 |
| 0,05 % Verbindung V-I plus 0,05 % Verbindung III-A | -0,5 | 1,3 | 3 | 6 | 8 | 12 | 14 |

Tabelle 1h

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung IV-C | 5,3 | 6,7 | 10 | 14 | 17 | 27 | 39 |
| 0,05 % Verbindung V-I plus 0,05 % Verbindung IV-C | -0,7 | 1,5 | 3 | 5 | 7 | 11 | 14 |

Tabelle 1i

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung V-I | 0 | 3 | 8 | 20 | 48 | 64 | 73 |
| 0,1 % Verbindung II-E-I | 7,5 | 13,6 | 19 | 24 | 27 | 35 | 42 |
| 0,05 % Verbindung V-I plus 0,05 % Verbindung II-E-I | 5,5 | 3,8 | 7 | 7 | 10 | 14 | 16 |

Tabelle 1j

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung VI-A | 5 | 44 | 57 | 65 | 70 | 81 | 88 |
| 0,05 % Verbindung I-B plus 0,05 % Verbindung VI-A | 3 | 5 | 8 | 11 | 3 | 17 | 23 |

Tabelle 1k

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-F | 0 | 13 | 41 | 59 | 64 | 76 | 83 |
| 0,05 % Verbindung I-B plus 0,05 % Verbindung V-F | 1 | 3 | 5 | 7 | 9 | 12 | 17 |

Tabelle 1l

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-A | 2 | 20 | 47 | 61 | 67 | 77 | 85 |
| 0,05 % Verbindung I-B plus 0,05 % Verbindung V-A | 4 | 5 | 7 | 9 | 11 | 15 | 20 |

Tabelle 1m

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-H | 1 | 16 | 45 | 59 | 64 | 75 | 83 |
| 0,05 % Verbindung I-B plus 0,05 % Verbindung V-H | -1 | 1 | 3 | 4 | 7 | 11 | 16 |

Tabelle 1n

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-C | 10 | 17 | 43 | 57 | 63 | 77 | 84 |
| 0,05 % Verbindung I-B plus 0,05 % Verbindung V-C | 6 | 8 | 10 | 11 | 12 | 18 | 21 |

Tabelle 1o

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-J | 2 | 12 | 42 | 56 | 63 | 76 | 82 |
| 0,05 % Verbindung I-B plus 0,05 % Verbindung V-J | -1 | 1 | 3 | 4,5 | 6 | 10 | 17 |

Tabelle 1p

| Additiv | YI nach Stunden Ofenalterung bei 80°C | | | | | | |
|---|---|---|---|---|---|---|---|
| | 0 | 250 | 500 | 750 | 1000 | 1500 | 2000 |
| 0,1 % Verbindung I-B | 4 | 8 | 12 | 14 | 19 | 22 | 30 |
| 0,1 % Verbindung V-G | 0 | 10 | 39 | 57 | 62 | 75 | 83 |
| 0,05 % Verbindung I-B plus 0,05 % Verbindung V-G | -2 | -1 | 1 | 2,5 | 3 | 6 | 13 |

## Patentansprüche

1. Zusammensetzung enthaltend

a) schlagfestes Polystyrol, ein Acrylnitril-Butadien-Styrol Copolymer (ABS) oder ein carboxyliertes Styrol-Butadien-Elastomer, wobei Polyphenylenharzmassen, die Polystyrol enthalten, ausgeschlossen sind,

b) mindestens eine Verbindung der Formel I, II, III oder/und IV,

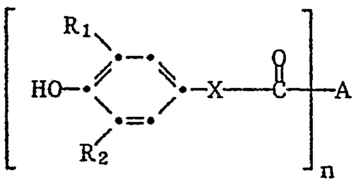
(I)

worin X eine direkte Bindung, Methylen, Ethylen oder eine Gruppe $-CH_2-\underset{R}{C}H-$ ist und R $C_1$-$C_8$-Alkyl bedeutet, $R_1$ und $R_2$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl darstellen und $R_2$ zusätzlich Wasserstoff ist, n eine ganze Zahl von 1 bis 6 ist, wenn n 1 bedeutet, A ein einwertiger Rest einer Hexose oder eines Hexitols, eine Gruppe $-O-CH_2-C-(CH_2OH)_3$, $-O-[(CH_2)_t-O]_v(CH_2)_t-OR'$, $-OR_3$ oder

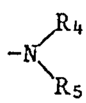

ist, worin t eine ganze Zahl von 2 bis 4 und v eine ganze Zahl von 2 bis 20 bedeuten, R' Wasserstoff oder $C_1$-$C_{12}$-Alkyl ist und $R_3$, $R_4$ und $R_5$ unabhängig voneinander Wasserstoff, $C_1$-$C_{24}$-Alkyl, $C_5$-$C_{12}$-Cycloalkyl, durch $C_1$-$C_4$-Alkyl substituiertes $C_5$-$C_7$-Cycloalkyl oder Phenyl bedeuten, wenn n 2 ist, A ein zweiwertiger Rest einer Hexose oder eines Hexitols, eine Gruppe $(-O-CH_2-)_2C-(CH_2OH)_2$, $-O-X_1-O-$, $-NH-X_2-NH-$,

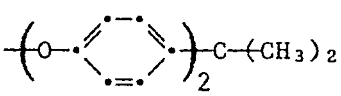 oder $-O-[(CH_2)_t-O]_v$ bedeutet, worin

$X_1$ 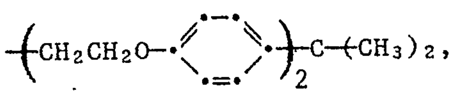

$C_2$-$C_{10}$-Alkylen, 3-Thiapentan-1,5-diyl, 2-Buten-1,4-diyl oder 2-Butin-1,4-diyl ist, $X_2$ $C_2$-$C_{10}$-Alkylen darstellt und t und v die oben angegebene Bedeutung haben, wenn n 3 ist, A ein dreiwertiger Rest einer Hexose oder eines Hexitols oder eine Gruppe $(-O-CH_2-)_3C-R_6$ bedeutet, worin $R_6$ Wasserstoff, $-CH_2OH$, $C_1$-$C_4$-Alkyl, ($C_1$-$C_{18}$-Alkyl)amido oder eine Gruppe

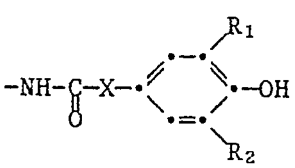 darstellt und $R_1$, $R_2$

und X die oben angegebene Bedeutung besitzen, wenn n 4 bedeutet, A ein vierwertiger Rest einer Hexose oder eines Hexitols, die Gruppe $(-O-CH_2-)_4C$ oder

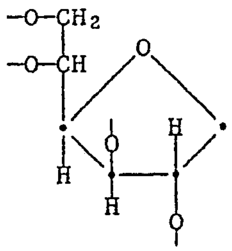

ist,
wenn n 5 bedeutet, A den fünfwertigen Rest einer Hexose oder eines Hexitols darstellt und
wenn n 6 bedeutet, A die Gruppe $(O-CH_2)_3$ $C-CH_2-O-CH_2-C(CH_2-O)_3$ oder ein sechswertiger Rest eines Hexitols ist;

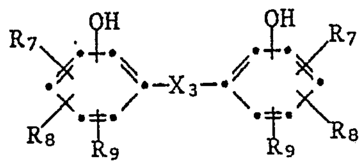 (II),

worin $R_7$, $R_8$ und $R_9$ unabhängig voneinander $C_1$-$C_{10}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind und $R_9$ zusätzlich Wasserstoff bedeutet, $X_3$ -S-, Methylen, Ethyliden, in 3-Stellung durch eine Gruppe

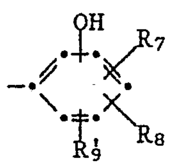

substituiertes $C_3$-$C_6$-Alkyliden, wobei $R_7$ und $R_8$ die oben angegebenen Bedeutungen besitzen und $R_9'$ Wasserstoff ist, oder $X_3$ ferner eine Gruppe

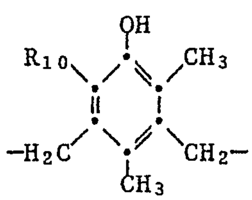 (A-1)

bedeutet, wobei $R_{10}$ $C_1$-$C_{10}$-Alkyl oder $C_5$-$C_{12}$-Cycloalkyl ist;

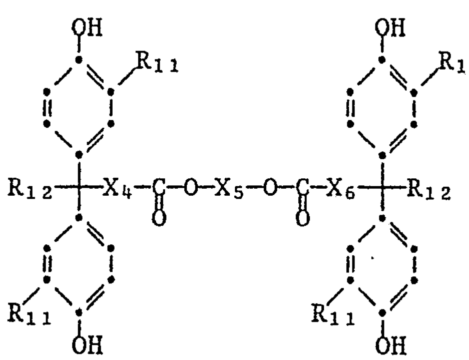 (III),

worin die Reste $R_{11}$ unabhängig voneinander $C_1$-$C_{10}$-Alkyl, $C_5$-$C_{12}$-Cycloalkyl oder durch $C_1$-$C_4$-Alkyl substituiertes $C_5$-$C_7$-Cycloalkyl sind, die Reste $R_{12}$ Methyl bedeuten, $X_4$ und $X_6$ unabhängig voneinander Methylen oder Ethylen sind und $X_5$ $C_2$-$C_{10}$-Alkylen ist;

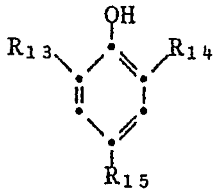

(IV),

worin $R_{13}$ und $R_{14}$ unabhängig voneinander $C_1$-$C_{10}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind und $R_{14}$ zusätzlich Wasserstoff oder $-CH_2SR_{16}$ bedeutet, $R_{15}$ $C_1$-$C_{12}$-Alkyl oder $-CH_2SR_{16}$ ist, $R_{16}$ $C_4$-$C_{18}$-Alkyl, Phenyl, $C_7$-$C_{10}$-Phenylalkyl oder eine Gruppe $-X_7-\underset{\underset{O}{\|}}{C}OR_{17}$ ist, wobei $X_7$ Methylen oder Ethylen und $R_{17}$ $C_1$-$C_{24}$-Alkyl darstellen, und

c) mindestens eine Verbindung der Formel V, VI, VII oder/und VIII,

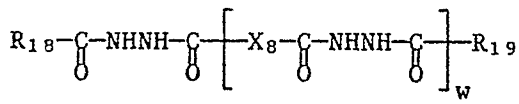

(V)

worin w 0 oder 1 bedeutet, $X_8$ eine direkte Bindung, $C_1$-$C_{18}$-Alkylen, Phenylen oder eine Gruppe $-X_9-\underset{\underset{O}{\|}}{C}-O-X_{10}-O-\underset{\underset{O}{\|}}{C}-X_{11}-$ darstellt, wobei $X_9$ und $X_{11}$ unabhängig voneinander eine direkte Bindung oder $C_1$-$C_{10}$-Alkylen sind und $X_{10}$ $C_2$-$C_{20}$-Alkylen, durch Schwefel oder Sauerstoff unterbrochenes $C_4$-$C_{10}$-Alkylen oder Phenylen ist, $R_{18}$ und $R_{19}$ unabhängig voneinander $C_1$-$C_{18}$-Alkyl, durch Schwefel unterbrochenes $C_5$-$C_{18}$-Alkyl, $C_1$-$C_{18}$-Alkyloxy, Phenyl, durch OH und/oder $C_1$-$C_4$-Alkoxy substituiertes Phenyl, $C_7$-$C_{10}$-Phenylalkyl oder eine Gruppe der Formel A-2, A-3 oder A-4 bedeuten,

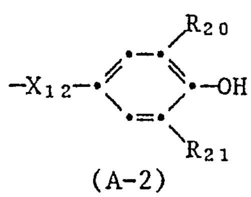 , 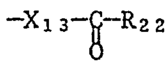 , 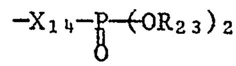

(A-2) (A-3) (A-4)

wobei $X_{12}$ eine direkte Bindung, Methylen, Ethylen oder eine Gruppe $-CH_2-\underset{R}{\underset{|}{C}}H-$ ist und R $C_1$-$C_8$-Alkyl bedeutet, $R_{20}$ und $R_{21}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $X_{13}$ eine direkte Bindung, $C_1$-$C_{10}$-Alkylen, durch Schwefel unterbrochenes $C_2$-$C_4$-Alkylen oder Phenylen ist, $R_{22}$ $C_1$-$C_{18}$-Alkyl oder $C_1$-$C_{18}$-Alkyloxy bedeutet, $X_{14}$ $C_1$-$C_2$-Alkylen und $R_{23}$ $C_1$-$C_{18}$-Alkyl sind;

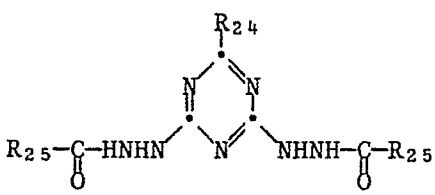

(VI),

worin $R_{24}$ Di($C_1$-$C_{12}$-alkyl)amino oder eine Gruppe $-NHNH-\underset{\underset{O}{\|}}{C}-R_{25}$ ist und die Reste $R_{25}$ unabhängig voneinander $C_1$-$C_{18}$-Alkyl, durch Schwefel unterbrochenes $C_5$-$C_{18}$-Alkyl, $C_1$-$C_{18}$-Alkyloxy, Phenyl, durch OH und/oder $C_1$-$C_4$-Alkoxy substituiertes Phenyl, $C_7$-$C_{10}$-Phenylalkyl, eine Gruppe der Formel A-2, A-3 oder A-4 bedeuten,

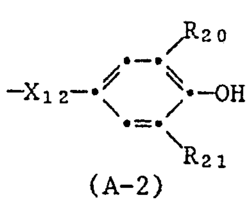 , 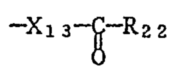 , 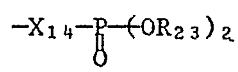

(A-2) (A-3) (A-4)

wobei $X_{12}$ eine direkte Bindung, Methylen, Ethylen oder eine Gruppe $-CH_2-\underset{R}{CH}-$ ist und R $C_1$-$C_8$-Alkyl bedeutet, $R_{20}$ und $R_{21}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, $X_{13}$ eine direkte Bindung, $C_1$-$C_{10}$-Alkylen, durch Schwefel unterbrochenes $C_2$-$C_4$-Alkylen oder Phenylen ist, $R_{22}$ $C_1$-$C_{18}$-Alkyl oder $C_1$-$C_{18}$-Alkyloxy bedeutet, $X_{14}$ $C_1$-$C_2$-Alkylen und $R_{23}$ $C_1$-$C_{18}$-Alkyl sind;

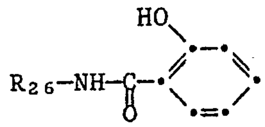

(VII),

worin $R_{26}$ eine Gruppe der Formel A-5, A-6 oder A-7 darstellt,

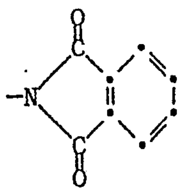

,

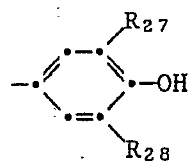

,

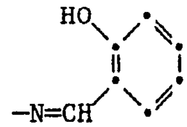

(A-5) (A-6) (A-7)

wobei $R_{27}$ und $R_{28}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind;

$(R_{29}-HNHN-\overset{O}{\overset{\|}{C}}\!\!-\!)_x\ D$ (VIII),

worin $R_{29}$ Wasserstoff, $C_2$-$C_{18}$-Alkanoyl, $C_3$-$C_{20}$-Alkenoyl oder eine Gruppe der Formel A-8

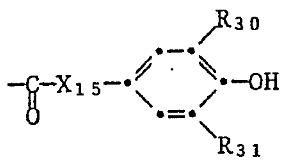

(A-8)

bedeutet, worin $X_{15}$ eine direkte Bindung, Methylen, Ethylen oder eine Gruppe $-CH_2-\underset{R}{CH}-$ ist und R $C_1$-$C_8$-Alkyl bedeutet und $R_{30}$ und $R_{31}$ unabhängig voneinander $C_1$-$C_{18}$-Alkyl, $C_5$-$C_{12}$-Cycloalkyl, durch $C_1$-$C_4$-Alkyl substituiertes $C_5$-$C_7$-Cycloalkyl, Phenyl oder $C_7$-$C_{10}$-Phenylalkyl sind, x 3 oder 4 bedeutet, wenn x 3 ist, D eine Gruppe

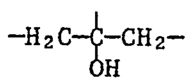

darstellt und wenn x 4 ist, D eine Gruppe

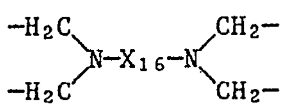

oder/und eine polymere Verbindung mit einer mittleren Molekulargewichtszahl von 500 bis 10 000 und den wiederkehrenden Struktureinheiten der Formel IX,

$-\!\!\!+ NHNH-\underset{O}{\underset{\|}{C}}-X_{17}-\underset{O}{\underset{\|}{C}}+\!\!\!-$ (IX)

worin $X_{17}$ eine direkte Bindung, $C_1$-$C_{10}$-Alkylen, durch Schwefel unterbrochenes $C_4$-$C_{10}$-Alkylen oder Phenylen bedeutet, wobei $X_{17}$ in den einzelnen Struktureinheiten die gleichen oder unterschiedliche Bedeutungen besitzt.

2. Zusammensetzungen gemäss Anspruch 1, enthaltend als Komponente b) mindestens eine Verbindung der Formel I, worin $R_1$ und $R_2$ unabhängig voneinander $C_1$-$C_4$-Alkyl, Cyclohexyl, Phenyl oder $\alpha,\alpha$-Dimethylbenzyl bedeuten, X Ethylen bedeutet und n 1, 2, 3, 4 oder 6 ist und
wenn n 1 ist, A $C_1$-$C_{18}$-Alkyloxy oder $C_1$-$C_8$-Alkylamino darstellt,
wenn n 2 ist, A eine Gruppe $-O-X_1-O-$, $-NH-X_2-NH-$ oder $-O-\!\!\!+CH_2CH_2-O+\!\!\!-_v$ darstellt, worin $X_1$ $C_2$-$C_6$-Alkylen oder 3-Thiapentan-1,5-diyl bedeutet, $X_2$ $C_2$-$C_6$-Alkylen ist und v 2, 3 oder 4 ist,

wenn n 3 bedeutet, A die Gruppe $-(O-CH_2)_3-$ $C-CH_3$ darstellt,
wenn n 4 bedeutet, A die Gruppe $-(O-CH_2)_4-$ C ist und
wenn n 6 bedeutet, A die Gruppe $-(O-CH_2)_3-$ $C-CH_2-O-CH_2-C-(CH_2-O)_3-$ darstellt,
oder/und eine Verbindung der Formel II, worin $X_3$ Methylen, eine Gruppe der Formel A-1, -S-, Butyliden oder eine Gruppe der Formel A-9

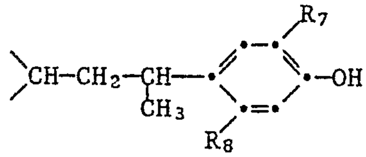

(A-9)

bedeutet und
wenn $X_3$ Methylen ist, $R_7$ und $R_8$ unabhängig voneinander $C_1$-$C_{10}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_9$ Wasserstoff oder $C_1$-$C_4$-Alkyl ist,
wenn $X_3$ eine Gruppe der Formel A-1 ist, $R_7$ und $R_8$ unabhängig voneinander $C_1$-$C_{10}$-Alkyl, $C_5$-$C_7$-Cycloalkyl, durch $C_1$-$C_4$-Alkyl substituiertes $C_5$-$C_7$-Cycloalkyl, Phenyl oder $C_7$-$C_{10}$-Phenylalkyl bedeuten, $R_9$ Wasserstoff ist und $R_{10}$ $C_1$-$C_4$-Alkyl oder Cyclohexyl darstellt, und
wenn $X_3$ -S-, Butyliden oder eine Gruppe der Formel A-9 bedeutet, $R_7$ $C_1$-$C_4$-Alkyl oder Cyclohexyl ist, $R_8$ Methyl oder Ethyl darstellt und $R_9$ Wasserstoff bedeutet,
oder/und eine Verbindung der Formel III, worin $R_{11}$ $C_1$-$C_4$-Alkyl oder Cyclohexyl bedeutet, $R_{12}$ Methyl ist, $X_4$ und $X_6$ Methylen sind und $X_5$ Ethylen ist,
oder/und eine Verbindung der Formel IV, worin $R_{13}$ $C_1$-$C_4$-Alkyl ist, $R_{14}$ Wasserstoff, $C_1$-$C_4$-Alkyl oder eine Gruppe $-CH_2SR_{16}$ bedeutet, $R_{15}$ Methyl, Dodecyl oder $-CH_2SR_{16}$ ist und $R_{16}$ $C_4$-$C_{18}$-Alkyl oder ($C_1$-$C_{18}$-Alkyl)oxycarbonylmethyl darstellt.

3. Zusammensetzungen gemäss Anspruch 1, enthaltend als Komponente c) mindestens eine Verbindung der Formel V, worin $X_8$ eine direkte Bindung, $C_2$-$C_6$-Alkylen oder Phenylen ist, $R_{18}$ und $R_{19}$ unabhängig voneinander $C_1$-$C_{18}$-Alkyl, $C_1$-$C_{18}$-Alkyloxy, Phenyl, durch -OH und/oder $C_1$-$C_4$-Alkoxy substituiertes Phenyl oder eine Gruppe der Formel A-2 bedeuten,
oder/und eine Verbindung der Formel VI, worin $R_{24}$ Di($C_2$-$C_8$-alkyl)amino oder eine Gruppe $-NHNH-\underset{\underset{O}{\|}}{C}-R_{25}$
bedeutet und $R_{25}$ $C_1$-$C_{18}$-Alkyl, Phenyl, durch -OH und/oder $C_1$-$C_4$-Alkoxy substituiertes Phenyl oder eine Gruppe der Formel A-2 darstellt,
oder/und eine Verbindung der Formel VII, worin $R_{26}$ eine Gruppe der Formel A-5 oder A-6 ist, wobei $R_{27}$ und $R_{28}$ unabhängig voneinander $C_1$-$C_4$-Alkyl oder Cyclohexyl bedeuten,
oder/und eine Verbindung der Formel VIII, worin $R_{29}$ Wasserstoff, $C_2$-$C_{10}$-Alkanoyl, $C_{10}$-$C_{20}$-Alkenoyl oder eine Gruppe der Formel A-8 bedeutet, wobei $X_{15}$ Ethylen ist und $R_{30}$ und $R_{31}$ unabhängig voneinander $C_1$-$C_4$-Alkyl oder Cyclohexyl sind,
oder/und eine polymere Verbindung mit einer mittleren Molekulargewichtszahl von 500 bis 10 000 und den wiederkehrenden Struktureinheiten der Formel IX, worin $X_{17}$ eine direkte Bindung, $C_1$-$C_6$-Alkylen oder 3-Thiapentan-1,5-diyl ist.

4. Zusammensetzungen gemäss Anspruch 1, enthaltend als Komponente b) mindestens eine Verbindung der Formel I, worin $R_1$ Methyl oder tert-Butyl ist, $R_2$ tert-Butyl darstellt, X Ethylen bedeutet und n 1, 2 oder 4 ist und
wenn n 1 ist, A $C_{10}$-$C_{18}$-Alkyloxy bedeutet,
wenn n 2 ist, A eine Gruppe $-O-(CH_2)_6-O-$, $-O-CH_2CH_2-S-CH_2CH_2-O-$ oder $-O-(CH_2CH_2-O)_3-$ darstellt und
wenn n 4 ist, A $-(O-CH_2)_4-$ C bedeutet.

5. Zusammensetzungen gemäss Anspruch 1, enthaltend als Komponente c) mindestens eine Verbindung der Formel V, worin $X_8$ eine direkte Bindung, Tetramethylen oder Phenylen ist, $R_{18}$ und $R_{19}$ unabhängig voneinander $C_1$-$C_{18}$-Alkyl, $C_1$-$C_{18}$-Alkyloxy, durch OH oder Methoxy substituiertes Phenyl oder eine Gruppe der Formel A-2 darstellen, worin $X_{12}$ Ethylen ist und $R_{20}$ und $R_{21}$ unabhängig voneinander $C_1$-$C_4$-Alkyl bedeuten.

6. Zusammensetzungen gemäss Anspruch 1, enthaltend als Komponente c) mindestens eine Verbindung der Formel VI, worin $R_{24}$ Di($C_2$-$C_8$-alkyl)-amino oder eine Gruppe $-NHNH-\underset{\underset{O}{\|}}{C}-R_{25}$
bedeutet und $R_{25}$ $C_1$-$C_{10}$-Alkyl oder Phenyl bedeutet.

7. Zusammensetzungen gemäss Anspruch 1, enthaltend als Komponente c) mindestens eine Verbindung der Formel VIII, worin $R_{29}$ Wasserstoff oder Oleolyl bedeutet, x 4 ist und D eine Gruppe

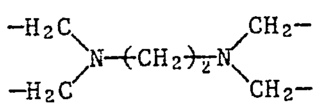

darstellt.

8. Zusammensetzungen gemäss Anspruch 1, dadurch gekennzeichnet, dass die Verbindung der Formel I

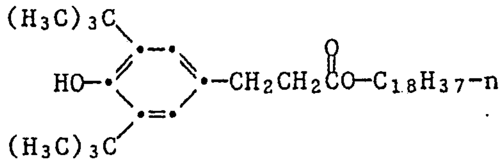

(I-A),

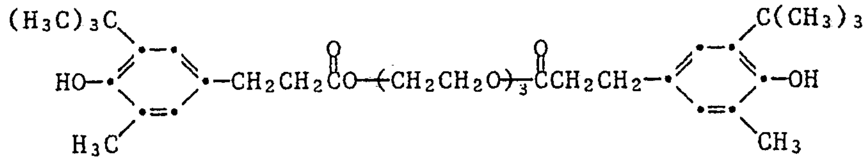

(I-B),

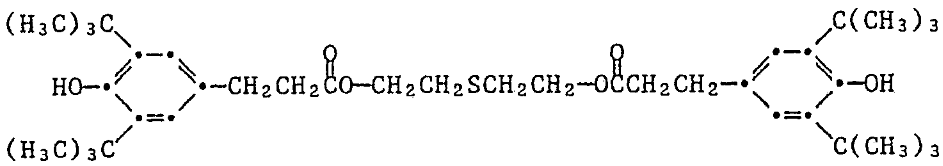

(I-C) oder

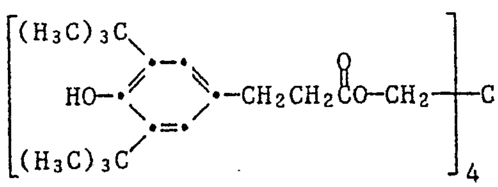

(I-D)

ist.

9. Zusammensetzungen gemäss Anspruch 1, dadurch gekennzeichnet, dass die Verbindung der Formel II

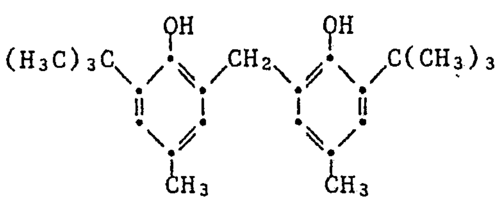

(II-A-1),

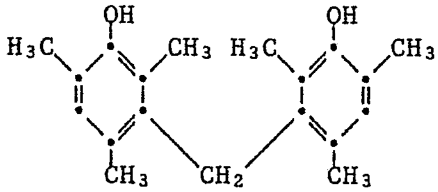

(II-B-1),

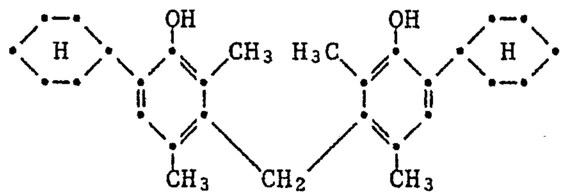

(II-B-2),

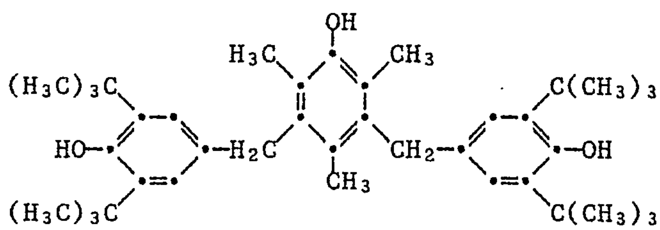

(II-D-1),

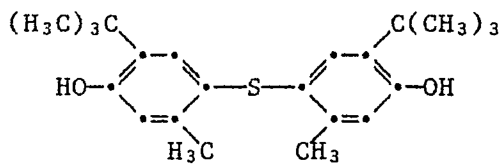

(II-E-1),

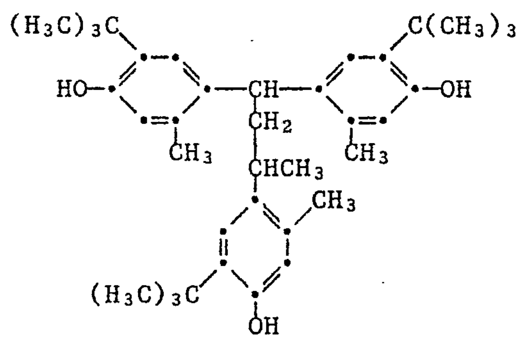

(II-F-1) oder

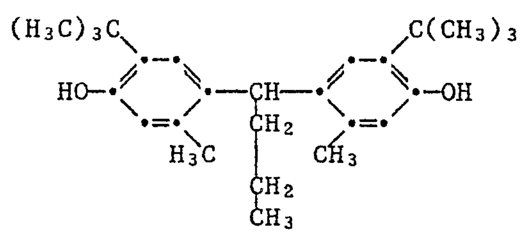

(II-G-1)

ist.

10. Zusammensetzungen gemäss Anspruch 1, dadurch gekennzeichnet, dass die Verbindung der Formel III

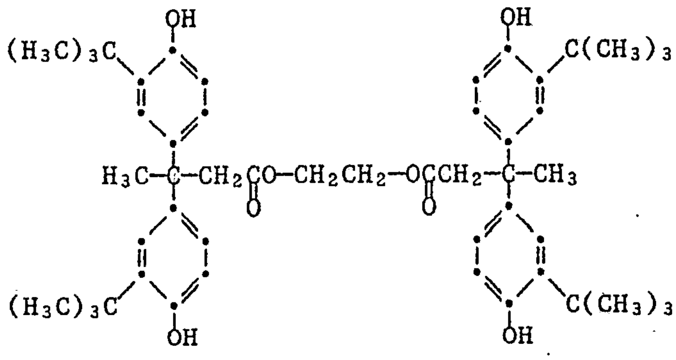

(III-A)

ist.

11. Zusammensetzungen gemäss Anspruch 1, dadurch gekennzeichnet, dass die Verbindung der Formel IV

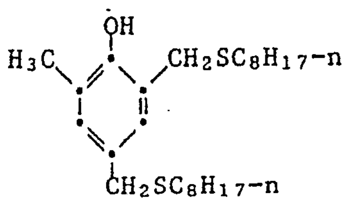

(IV-A),

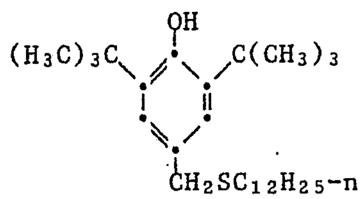

(IV-B),

oder

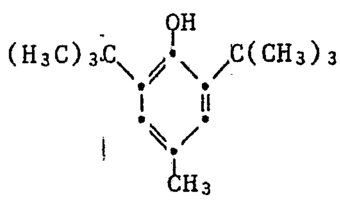

(IV-C) ist.

12. Zusammensetzungen gemäss Anspruch 1, dadurch gekennzeichnet, dass die Verbindung der Formel V

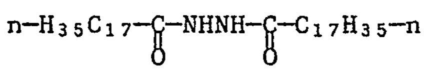

(V-A),

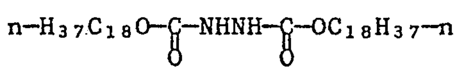

(V-B),

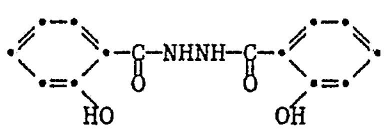

(V-C),

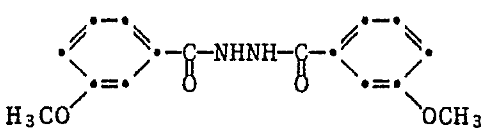

(V-D),

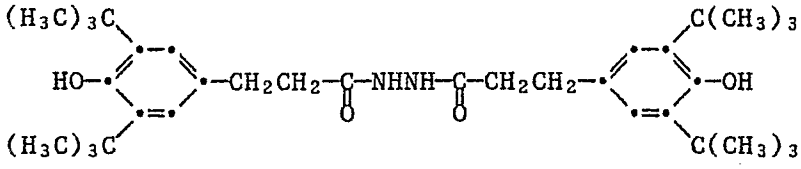 (V-E),

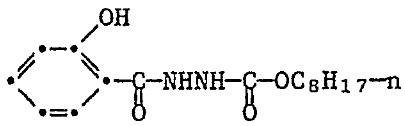 (V-F),

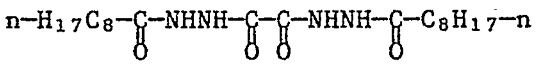 (V-G),

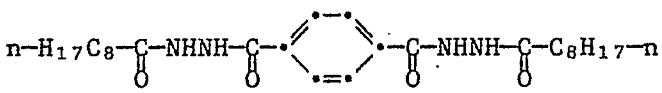 (V-H),

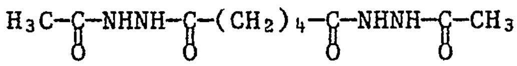 (V-I) oder

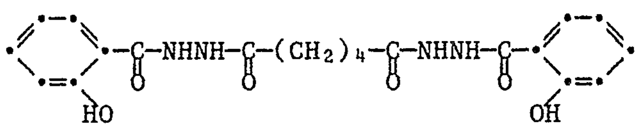 (V-J) ist.

13. Zusammensetzungen gemäss Anspruch 1, dadurch gekennzeichnet, dass die Verbindung der Formel VI

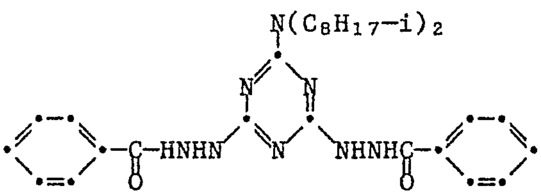 (VI-A)

ist.

14. Zusammensetzungen gemäss Anspruch 1, enthaltend als Komponente b) mindestens eine Verbindung der Formel I, II oder/und III und als Komponente c) mindestens eine Verbindung der Formel V oder/und VI.

15. Zusammensetzungen gemäss Anspruch 1, enthaltend als Komponente b) mindestens eine Verbindung der Formel I oder/und II und als Komponente c) mindestens eine Verbindung der Formel V.

16. Zusammensetzungen gemäss Anpruch 1, enthaltend als Komponente a) ein Acrylnitril-Butadien-Styrol Copolymer (ABS).

17. Zusammensetzungen gemäss Anpruch 1, enthaltend als Komponente a) ein schlagfestes Polystyrol.